(19)

**Europäisches Patentamt**

**European Patent Office**

**Office européen des brevets**

(11) **EP 4 592 728 A1**

(12) **EUROPEAN PATENT APPLICATION**

(43) Date of publication:
**30.07.2025 Bulletin 2025/31**

(21) Application number: **24153504.6**

(22) Date of filing: **23.01.2024**

(51) International Patent Classification (IPC):
***G02B 21/00*** (2006.01)  ***G01N 21/64*** (2006.01)

(52) Cooperative Patent Classification (CPC):
**G02B 21/0076; G01N 21/6456; G02B 21/0032**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Max-Planck-Gesellschaft zur Förderung der Wissenschaften e.V.
80539 München (DE)**

(72) Inventors:
• **HELL, Stefan W.
37085 Göttingen (DE)**
• **HENSEL, Thomas Arne
37075 Göttingen (DE)**
• **WIRTH, Otto
64285 Darmstadt (DE)**

(74) Representative: **REHBERG HÜPPE + PARTNER Patentanwälte PartG mbB
Robert-Gernhardt-Platz 1
37073 Göttingen (DE)**

(54) **METHOD OF DETERMINING AN ARRANGEMENT OF A NUMBER OF POINT SOURCES**

(57)     In a method of determining an arrangement of point sources in a sample the point sources are scanned (3) with a probe signal comprising a probe signal intensity. A spatial intensity distribution of the probe signal intensity has a local probe signal intensity minimum that is, in at least one spatial direction, delimited on both sides by probe signal intensity maxima. The local probe signal intensity minimum is positioned at different probe signal minimum positions at distances in the at least one spatial direction. A measurement intensity of a measurement signal coming from the point sources is registered (4) for each of the different probe signal minimum positions. The measurement intensity depends on the probe signal intensity at point source positions of the point sources. The point sources are limited (2) both to a known point source number of at least 2, and to such a small spatial area of the sample that a spatial course of the registered measurement intensities over the different probe signal minimum positions has one local measurement signal minimum only. The arrangement of the point sources is determined (5) from the spatial course of the registered measurement intensities over the different probe signal minimum positions utilizing previous knowledge of the arrangement of the point sources, the previous knowledge including the known point source number and, at least with a point source number above 4, a basic geometry of the arrangement of the point sources.

**Fig. 1**

EP 4 592 728 A1

## Description

### TECHNICAL FIELD OF THE INVENTION

The invention relates to a method of determining an arrangement of equal point sources in a sample at a high precision. More particularly, the invention relates to a method according to the preamble of claim 1.

Many embodiments of the method will belong to the field of microscopy and more particularly to the field of ultra-high resolution light microscopy. Other embodiments of the method will belong to the field of sonography and more particularly to the field of ultrasonography.

### PRIOR ART

In, for example, investigating biological processes, a determination of arrangements of different or equal structures or parts of structures, and particularly a determination of temporal developments of such arrangements are of interest. The structures or parts of structures may, for example, be different proteins and/or different areas of one protein or any other larger molecule. In order to determine the arrangement of interest, the structures may be marked with point sources or the structures may inherently comprise point sources providing a measurement signal, and, using the measurement signal, the arrangement of these point sources may be determined as an image of the arrangement of the structures of interest.

One group of point sources used for this purpose are fluorophores. Fluorophores can be probed or, more particularly, excited with excitation light, and they can be localized based on fluorescence light emitted in response to their excitation by the excitation light. However, the fluorescence light can only be assigned to an individual fluorophore, if its distance to neighboring fluorophores is at least about $\lambda/(2n \sin a)$, $\lambda$ being the wavelength of the fluorescence light, n being the refractive index of an optical material between a sample and an objective used for imaging the fluorescence light, and a being a half angle of an aperture of the objective. This is a strong limitation to the arrangement of structures which may be determined using equal fluorophores as point sources.

This limitation may be overcome by using different fluorophores for neighboring structures which can be probed with excitation light of different wavelengths and/or which emit fluorescence light of different wavelengths. However, this concept is limited by a cross talk between the excitation cross sections of the different fluorophores and an overlap of the emission spectra of the different fluorophores. This particularly applies if more than two different fluorophores are needed to mark more than two structures arranged at smaller distances than $\lambda/(2n \sin a)$. Further, this concept requires an additional expenditures for the excitation and/or registration at different wavelengths, and the number of otherwise similar fluorophores which can be excited and/or which emit at easily distinguishable wavelengths is strongly limited.

Another concept of separately localizing fluorophores arranged at a very close distance makes use of switchable fluorophores, i.e. of fluorophores that can be switched between an on-state in which they are excitable for emission of fluorescence light, and an off-state in which they are nor excitable for emission of fluorescence light. If only one fluorophore of an arrangement of a number of fluorophores is in its on-state at a certain point in time, its position can be determined at a high precision from the fluorescence light emitted by it as this fluorescence light exclusively stems from this fluorophore. Once all positions of all fluorophores are determined in this fashion, the arrangement of the fluorophores is known. However, this concept does not allow for determining the positions of all fluorophores at a same point in time. Further, a switching signal always affects all fluorophores of the arrangement. Thus, it is not possible to switch the fluorophores on one after the other. Instead, which fluorophore will actually be switched on is a matter of transition probabilities. With a higher number of fluorophores it takes some additional time to really determine the positions of all fluorophores, i.e. much more time than the time needed for determining the position of one fluorophore multiplied by the number of fluorophores. Further, some switchable fluorophores tend to blink, i.e. to change between their on- and off-states in an uncontrolled fashion.

US 9 719 928 B2 discloses a method of high-resolution fluorescence microscopy using a structured beam of excitation light. In order to determine the locations of individual fluorescent molecules in a sample, which keep a minimum distance with regard to each other, the individual fluorescent molecules are excited for emission of fluorescence light by means of excitation light. The fluorescence light is registered for different positions of a zero point of an intensity distribution of the excitation light. The distance between these positions is at least half the minimum distance of the fluorescent molecules. The locations of the fluorescent molecules are derived from the course of the intensity of the fluorescence light over the positions of the zero of the excitation light. Actually, the distances between the individual fluorescent molecules are adjusted to keep a minimum value $d = \lambda/(2n \sin a \sqrt{(1 + I/I_S)})$, wherein $\lambda$ is a wave length of the excitation light, n is the refraction index of an optical material in which the intensity distribution of the excitation light with the at least one minimum is formed, a is a half angle of an aperture of an optical arrangement by which the excitation light is directed on to the sample, I is a maximum intensity of the excitation light within the sample, and Is is a substance-dependent fluorescence excitation saturation intensity of the excitation light. The adjustment of the distances between the individual fluorescent molecules to the minimum value d is achieved either by a low concentration of the fluorescent molecules in the sample or by using molecules which are transferable or switchable between a non-fluorescent state and a fluorescent state. By means of this known method, an arrangement of fluorescent molecules used as equal point sources can be determined without switching only if the point sources keep the minimum distance d. In this case, the course of the intensity of the fluorescent light over the positions of the zero point of the excitation light comprises a separate local minimum for each of the fluorescent molecules, i.e. at each position corresponding to the position of the respective fluorescent molecule in the sample. However, there are many arrangements of structures of interest which do not keep the minimum distance d. These arrangements may only be determined using different fluorescent molecules or switchable fluorescent molecules with all the drawbacks explained above.

US 10 962 479 B2 discloses a method of high spatial resolution determining a position of a singularized molecule which is excitable for emission of luminescence light, in n spatial dimensions in a sample. The excitation light is directed onto the sample with an intensity distribution which has a zero point and intensity increasing regions adjoining the zero point on both sides in each of the n spatial dimension. The zero point is arranged at not more than nx3 different positions. The luminescence light emitted by the singularized molecule is separately registered for each of the different positions of the zero point. The position of the singularized molecule in the n spatial dimensions in the sample is deduced from intensities of the luminescence light separately registered for the not more than nx3 different positions of the zero point. A singularized molecule has a minimum distance to other similar molecules which are excitable with the same excitation light for emission of fluorescence light in a same wavelength range. This minimum distance is safely kept if the distances of the singularized molecules do such similar molecules are at least as high as the diffraction barrier at the wave length of the luminescence light, i.e. at least $\lambda/(2n \sin\alpha)$, see above. Thus, this known method is only suitable for determining the arrangements of equal point sources arranged at clearly smaller distances, if different or switchable molecules are used, and if the associated problems, see above, are accepted. On the other hand, this known method which is also known as MINFLUX (minimal photon fluxes)-microscopy allows for determining the position of an individual molecule at a very high precision without needing many photons emitted by the molecule.

## OBJECT OF THE INVENTION

It is the object of the present invention to provide a method of determining an arrangement of equal point sources in a sample at a high precision, which does without switchable point sources even if the point sources are arranged at very small distances.

## SOLUTION

According to the present invention, the object of the invention is solved the method of independent claims1.

Preferred embodiments of the method according to the invention are defined in the dependent claims.

## DESCRIPTION OF THE INVENTION

In the method of determining an arrangement of point sources in a sample according to the present invention, the point sources are scanned with a probe signal comprising a probe signal intensity. A spatial intensity distribution of the probe signal intensity has a local probe signal intensity minimum that is, in at least one spatial direction, delimited on both sides by probe signal intensity maxima. During the step of scanning the point sources with the probe signal, the local probe signal intensity minimum is positioned at different probe signal minimum positions at distances in the at least one spatial direction. Further, a measurement intensity of a measurement signal coming from the point sources is registered for each of the different probe signal minimum positions. The measurement signal registered may be any measurement signal whose measurement intensity depends on the probe signal intensity at point source positions of the point sources. The point sources whose arrangement is to be determined are limited both to a known point source number of at least 2, and to such a small spatial area of the sample that a spatial course of the registered measurement intensity over the different probe signal minimum positions of the local probe signal intensity minimum has one measurement signal minimum only. The arrangement of the point sources are determined from the spatial course of the registered measurement intensities over the different probe signal minimum positions utilizing previous knowledge of the arrangement of the point sources. This previous knowledge includes the known point source number and, at least with a point source number above 4, a geometry of the arrangement of the point sources.

The distances of the different probe signal minimum positions in the at least one spatial direction are to be selected such that the shape of the one local measurement signal minimum can be determined from the measurement intensities registered at these different probe signal minimum positions. For two point sources, the shape of the one local measurement signal minimum can typically be determined from the measurement intensities registered at just three different probe signal minimum positions in the at least one spatial direction, wherein one of the probe signal minimum position is arranged on both sides of the arrangement of interest and the third probe signal minimum position is within the arrangement of interest. The distances of these different probe signal minimum positions will be of a typical order of one or some tenth of a FWHM of the probe signal minimum. The FWHM of any minimum is determined as that width of the course of the respective intensity at half the depth of the local minimum as compared to neighboring maxima. Thus, the FWHM will actually be a "full width at half *minimum*".

The measurement intensity may be linearly depending on the probe signal intensity at the respective point source position, and it may be starting from zero or a measurement intensity noise at a probe signal intensity of zero. However, there may also be a non-linear dependency of the measurement intensity on the probe signal intensity. Particularly, there may be such a nonlinearity at higher probe signal intensities. In the area of the probe signal intensity minimum, there will only be very small probe signal intensities, and, at the small probe signal intensities, there will, normally, be a linear dependency of the measurement intensity on the probe signal intensity. If, however, the probe signal excites the point sources for emitting the measurement signal via a two or multiple photon process, there is a non-linear dependency of the measurement intensity on the probe signal intensity even at low probe signal intensities.

In the method according to the present invention, at least some previous knowledge of the arrangement of the point sources is utilized. The minimum previous knowledge of the point sources is the known point source number. The point source number may be known due to the nature of the arrangement of the equal point sources of interest. In another embodiment, the point source number may be known from a measurement of a total intensity of the measurement signal. The known point source number is not just known to be within the range from 2 to, for example, 32. Instead, the exact point source number is a previous knowledge utilized in the method according to the present invention.

At least with a point source number above 4, the previous knowledge further includes the basic geometry of the arrangement of the point sources. This known basic geometry may be the arrangement of the point sources at equal distances to be determined along a straight line or along a circle. With a point source number of not more than 4, and particularly with a point source number of not more than 3, the geometry of the arrangement of the point sources is inherently limited and may often also be determined from the spatial course of the registered measurement intensities over the different probe signal minimum positions. With a point source number of 2, the geometry of the arrangement of the point sources is inherently known, as two point sources are always arranged at a distance to be determined along a straight line.

The fact, that the spatial course of the registered measurement intensities over the different probe signal minimum positions has one local measurement signal minimum only means that the point sources are arranged in a really small spatial area of the sample as compared to the FWHM of the local probe signal intensity minimum. Further, the measurement signals from all point sources contribute to this spatial course of the registered measurement intensities. Thus, a rather high overall measurement signal is available without the need of high contributions by the individual point sources.

The spatial course of the registered measurement intensities over the different probe signal minimum positions from which the arrangement of the point sources is determined is a shape of the one local measurement signal minimum.

Using the previous knowledge, the arrangement of the point sources in the at least one spatial direction can be determined from a depth and/or a width of the one local measurement signal minimum. The parameters depth and width of the one local measurement signal minimum are correlated. They both strongly respond to an increase of the distance of the point sources starting from zero. The depth of the one local measurement signal minimum decreases, and its width increases with increasing distance of the point sources. Because this decrease of the depth and increase of the width are particularly strong with the distance of the point sources increasing from zero, the method according to the invention is particularly well suited to determine very small distances of the point source close to zero, whereas prior art methods need a minimum distance of the point sources.

In one embodiment of the method according to the invention, the one local measurement signal minimum is compared with the local probe signal intensity minimum or with a comparative local measurement signal minimum that corresponds to a comparative arrangement of the point sources in which all point source positions of all the point sources are identical in the at least one spatial direction, i.e. in which the point sources positions are arranged at zero distances in the at least one spatial direction. Each difference noted in this comparison is indicative of a distance of the actual point source positions. With many probe signals, the local probe signal intensity minimum which may be easily determined by scanning a single gold bead with the probe signal intensity distribution and registering the probe signal reflected by the gold bead.

The step of determining the arrangement of the point sources may comprise fitting a curve to the registered measurement intensities. More particularly, at least one fit variable that is tuned in fitting the curve to the registered measurement intensities may directly be a parameter that describes the arrangement of the point sources. For example, this parameter may be the distance of the point sources in the at least one spatial direction.

In the method of the present invention it may be preferred that the point source number is not more than 32 or 16 or 8 or 4, and with 3 or 2 point sources, their arrangement may be most easily be determined without any further previous knowledge at a high precision from the spatial course of the registered measurement intensities over the different probe signal minimum positions.

Alternatively or additionally to a low number of point sources, further previous knowledge of the arrangement of the point sources is to be utilized in determining the arrangement of the point sources from the spatial course of the registered measurement intensities over the different probe signal minimum positions. This previous knowledge includes a certain basic geometry of the arrangement of the point sources. For example, the point sources may be arranged on a ring, and the parameters of the arrangement of the point sources to be determined may be the diameter of this ring or distances of the point sources along the circumference of the ring.

Further, the previous knowledge of the arrangement of the point sources may include relative scattering cross sections of the individual point sources. Preferably, these relative scattering cross sections of the individual point sources are equal, i. e. all point sources may be identical. Nevertheless, the method according to the present invention may be carried out in parallel with two or more sets of different point sources that can be probed with different probe signals and/or provide distinguishable measurement signals. These different sets of different point sources may, for example, be used to mark different subsets of structures of a macromolecule.

As already pointed out before, the arrangement of the point sources may be determined with regard to their point source distances in the at least one spatial direction. If the arrangement of the point sources is further determined with regard to their center of mass in the at least one spatial direction, all point source positions in the sample are known.

The method according to the present invention does completely without switchable point sources which can be transferred between an on-state providing the measurement signal and an off-state not providing the measurement signal. Thus, the point sources may also be easily selected for not being blinking, i.e. transferring between an on-state and an off-state in an uncontrolled fashion. Instead, the point sources may easily be selected from point sources having a fixed dependency on the measurement intensity on the probe signal intensity at the respective point source position.

In general, the probe signal will be of wavy nature, i.e. have a wavelength. Thus, the local probe signal intensity minimum may be formed using destructive interference of the probe signal. Such a formation of the local probe signal intensity minimum allows for a small FWHM of the local probe signal intensity minimum. Further, the spatial area of the sample to which the point sources are limited may preferably be not larger than 1/50 of the wavelength and optionally not even be larger than 1/75 of the wave length in the at least one spatial direction. Thus, the dimensions of the spatial area of the sample to which the point sources are limited may be far below the diffraction barrier of $\lambda/(2n \sin\alpha)$.

Most preferably, the local probe signal intensity minimum comprises a zero of the probe signal intensity. In this case, there is a maximum dependency of the shape of the at least one local measurement signal minimum on the distance of the point sources differing from zero in the at least one spatial direction. In fact, in this case, the spatial resolution or precision of the method according to the present invention in the at least one spatial direction only depends on the background or base line of the measurement signal. Particularly, there is rather no statistical noise as there would be no measurement signal with all point sources being positioned in the zero of the probe signal intensity minimum. This is a big difference to all methods utilizing a probe signal maximum for scanning an arrangement of point sources of interest. With a maximum of the probe signal intensity there will be a maximum measurement signal and a maximum absolute statistical measurement signal noise, when all point sources are located in the probe signal maximum.

As already pointed out before, the method according to the present invention is particularly well suited for determining small distances of the point sources in the at least one spatial direction. Thus, the spatial area of the sample to which the point sources are limited is preferably not larger than 1/10 and optionally not larger than 1/20 of a FWHM of the local probe signal intensity minimum.

In many embodiments of the method according to the invention, the probe signal will be an electromagnetic signal. Very often, the electromagnetic signal will be light. The light may have a wavelength in the infrared, the visible or the UV range. In another embodiment, the electromagnetic signal comprises x-rays. In a further embodiment, the probe signal is a sound signal or any other pressure signal of wavy nature.

The measurement signal may be fluorescence light and the point sources may be fluorophores. In another embodiment, the measurement signal is any light or other electromagnetic signal inelastically scattered by the point sources. For example, the measurement signal may be Raman-scattered light from the point sources. Further, the measurement light may be elastically scattered light, like, for example, light scattered by latex beads used as point sources, or any other electromagnetic signal elastically scattered by the point sources. In even another embodiment, the measurement signal may be sound, optionally ultrasound, scattered by the point sources.

In all embodiments the point sources act as point sources of the measurement signal, i. e. as sources whose dimensions are very small as compared to a wavelength of the measurement signal. Generally, these dimensions will not be more than 1/128 or 1/256 or 1/512 of the wavelength of the measurement signal.

In the method according to the present invention, the steps of scanning the point sources with a probe signal, registering the measurement intensity of the measurement signal coming from the point sources, and determining the arrangement of the point sources from a spatial course of the registered measurement intensities over the different probe signal minimum positions will most typically not only be executed once but repeatedly. The repetition of the steps may be made to determine the arrangement of other point sources. In other embodiments, the above steps are repeated in order to track variations of the arrangement of the point sources. The variations may be tracked to investigate the effect of external influences on the sample, like, for example, physical or chemical influences, including drugs. Further, the variations may be tracked together with movements of an entity, to which the point sources are attached, within the sample. This movement may lead the entity into different areas of the sample in which it is subject to different external influences.

The method of the present invention may utilize many measures known from MINFLUX-microscopy to decrease the measurement signal base line or background and/or to enhance the spatial resolution or precision by reducing the dimensions of the local probe signal intensity minimum over which the intensity of the probe signal increases to a maximum value in the at least one spatial direction. For example, the measurement signal may be registered confocally with regards to the local probe signal intensity minimum. Further, an overall intensity of the probe signal may be increased, once the arrangement of the point sources has already been determined at such a precision that new probe signal minimum positions may be selected that ensure that no point source of the arrangement will be subjected to more probe signal intensity than the maximum value despite the increased overall intensity of the probe signal.

The local probe signal intensity minimum may be delimited in one, two or all three spatial directions by probe signal intensity maxima. All techniques known from STED- and MINFLUX-microscopy of forming a local intensity minimum may be applied. These techniques include, but are not limited to, forming a donut- or bottle-shaped spatial intensity distribution comprising a central zero; shaping wavefronts of the probe signal into a $2\pi$ or higher order phase vortex; directing the probe signal onto the sample out of different or even opposite directions, like, for example, in $4\pi$-microscopy.

If the local probe signal intensity minimum is delimited in one spatial direction only, the point sources may be scanned at first in the one spatial direction, and then once again in a second spatial direction with the local probe signal intensity minimum being oriented in this other spatial direction which may be orthogonal to the first spatial direction. Such a scanning of a region of interest of a sample with a probe signal intensity minimum or maximum only being delimited in one spatial direction is well known from prior art methods. Further, a probe signal intensity minimum only delimited in one or two spatial directions may be rotated during scanning the arrangement of the point sources, as also generally known from prior arts methods, see, for example, WO 2016/156541 A1.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if a local probe signal intensity minimum is mentioned, this is to be understood such that there is exactly one local probe signal intensity minimum or there are two local probe signal intensity minimums or more local probe signal intensity minimums. (However, the feature of the one local measurement signal minimum only refers to the different probe signal minimum positions of one local probe signal intensity minimum.) Additional features may be added to these features listed in the claims, or these features may be the only features of the respective product.

The reference signs contained in the claims are not limiting the extent of the matter protected by the claims. Their sole function is to make the claims easier to understand.

## BRIEF DESCRIPTION OF THE DRAWINGS

In the following, the invention is further explained and described with respect to preferred exemplary embodiments illustrated in the drawings.

Figs. 1a to 1d     illustrate utilizing a diffraction maximum vs. a minimum of light to resolve two inelastic point scatterers.

Figs. 2a to 2c     illustrate a theoretical localization precision of two point scatterers probed with a diffraction maximum (max) or a diffraction minimum (min) for N=100 detected photons.

Figs. 3a to 3i    illustrate a measurement of distances between two simultaneously emitting fluorescence molecules by (x,y-) scanning with an illumination intensity minimum.

Figs. 4a to 4b    illustrate resolving two constantly emitting fluorophores at distances down to 8 nm.

Figs. 5a to 5h    illustrate an uninterrupted resolution and localization of two moving fluorophores.

Figs. 6a to 6b    illustrate a numerical simulation of a sub-diffraction localization of multiple simultaneously scattering point sources.

Figs. 7a to 7c    illustrate a distance measurement via line-scans and control measurement via bleaching steps.

Fig. 8    is a flow chart of a method of determining an arrangement of equal point sources in a sample according to the present invention.

## DESCRIPTION OF EMBODIMENT EXAMPLES

Discerning two or more identical and constantly scattering point sources using freely propagating waves is thought to be limited by diffraction. This disclosure shows, both theoretically and experimentally, that by employing a diffraction minimum rather than a maximum for resolution, a given number of point sources can be discerned at tiny fractions of the employed wavelength. Specifically, an 8 nm distance between two constantly emitting (non-blinking, non-switchable) fluorescent molecules, corresponding to 1/80 of the wavelength, was identified. Moreover, the present disclosure shows that, contrary to naive expectations, the measurement precision improves with decreasing distance between the point sources and may even improve with increased point source density, thus opening up the prospect of resolving clusters of (optical) point sources at tiny fractions of the wavelength.

A prominent question in physics is how small the distance d between two simultaneously scattering point sources can be in order to still be separable by focused (light) waves of a wavelength $\lambda$. Separating two inelastic optical scatterers or two other similar point sources, and measuring their distance is important in many fields, particularly in fluorescence microscopy, which is the most widely applied imaging modality in the life sciences.

Fluorescent molecules, also known as fluorophores, are treated as inelastic optical scatterers here, because by dissipating a part of the absorbed photon energy and emitting a photon of longer wavelength, these molecules annihilate any phase information of the incoming light field. In any case, the textbook answer to the question of the minimally resolvable distance is the Rayleigh criterion, see Refs. 1 and 2. It states that the distance between the diffraction maxima of the scatterers in an image should not be smaller than d = 0.61 $\lambda/(n\ sin\alpha)$, with n and $sin\alpha$ denoting the refractive index of the immersion medium and the sine of the half-aperture angle of the lens, respectively. While introduced for widefield microscopy, Rayleigh's limit also applies to popular scanning optical microscopy, where the object is scanned with a focused beam of wavelength $\lambda$ and the image given by the number of photons registered per scanning position, see Ref. 3.

Unlike many other microscopy methods, fluorescence microscopy does not map out the molecules of interest *per se,* such as the proteins in a cell, but the fluorophores that have been linked to those molecules as labels. Although disadvantageous at first glance, this aspect is critical in superresolution fluorescence microscopy or nanoscopy because to obtain subdiffraction resolution, these methods manipulate fluorophore states. Specifically, fluorophores that reside closer than the diffraction barrier are discerned by transiently transferring a fraction of them into a molecular state that emits photons (ON), whereas the remaining fraction is kept in a state that does not (OFF). Placing fluorophores in different states for a brief period of detection instantly provides separability, rendering separation by focusing to a tiny spot obsolete, see Refs. 4 and 5. This ON/OFF state transition is a key physical element of all diffraction-unlimited fluorescence microscopy methods known to date, including those called STED, PALM/STORM, and the more recently introduced approaches called MINFLUX, see Ref. 6, and DNA-PAINT, see Ref. 7. If this element were to be removed, none of them could provide nanoscale resolution.

Unfortunately, the separation by ON/OFF molecular states comes with fundamental limitations that preclude extending superresolution beyond fluorescence, e.g. to other types of (inelastic) optical scattering such as Raman, let alone to other areas of physics resolving with diffracted waves. Even within the realm of fluorescence microscopy, the ON/OFF principle inevitably demands that neighboring fluorophores must be recorded sequentially. This drawback is intolerable if adjacent fluorophores need to be observed and resolved at the same time, a situation that is commonly encountered in biophysical experiments involving molecular tracking. Hence, motivated by both fundamental and practical reasons, as well as the recent success of MINFLUX, see Ref. 6, the ability of optical microscopy to resolve individual scatterers that remain identical throughout the observation process has been reinvestigated.

The present disclosure shows that scanning with a focused light field having a (central) diffraction minimum - rather than a maximum - allows for measuring the distances between a known number of optically identical fluorophores down to single-digit nanometers. By measuring the positions of two fluorophores situated only 8 nm ($\lambda/80$) apart, it can be shown that Rayleigh's criterion grossly overestimates the minimal distance at which two inelastic scatterers can be resolved in practice. The underlying physical reason is that probing the scatterers with a diffraction intensity minimum modulates the scattered signal without modulating their state, whilst precluding the modulation from being drowned by noise. As a result, the continuous tracking of (at least) two fluorophores at nanometer distances becomes viable.

This disclosure also shows that for a given signal to noise ratio (SNR) and background, the precision in separability in fact increases with decreasing distance between the scatterers. Defying naive expectations, this arguably surprising characteristic also allows for extending the method to a larger number of scatterers, which holds great potential for the optical investigation of dynamic (re)arrangements of proteins and other molecules with conventional optics at the nanoscale.

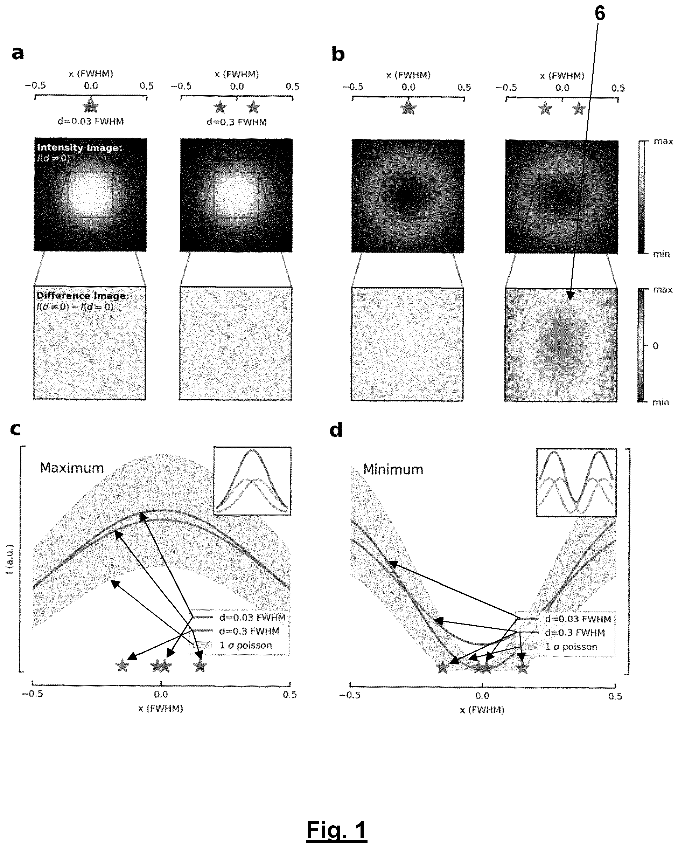

Diffraction maxima representing two fluorophores located at distance $d<\lambda/2$ overlap considerably in the image of an optical microscope. This holds both for those formed by diffracted fluorescence photons on a camera, as well as for the maxima gained by scanning a focused excitation beam across the focal plane and registering the fluorescence photons with a confocal point detector. In both cases, the identification of each individual fluorophore is heavily contingent upon the noise in the image, which is usually Poissonian, see Figs. 1a and 1b. If the signal-to-noise ratio (SNR) was infinite and the point-spread-function (PSF) of the imaging system perfectly known, the fluorophores could always be resolved by deconvolution with the PSF. In practice, however, the knowledge of the PSF is compromised by aberrations and the SNR is by far too low for resolving the fluorophores reliably, see Refs. 8 and 9.

In general, changing $d$ between two inelastic point scatterers modulates the spatial distribution and amplitude of their joint image signal $I(d)$. For overlapping diffraction maxima, see Fig. 1c, the noise adds up and the modulation is noticeable only for about $d \geq \lambda/2$. Fortunately, the modulation is easier to detect by contrasting the joint image signal with a zero-signal baseline. Harnessing this idea, the scanning of an excitation beam with a focal light field having a central intensity minimum (Fig. 1b) is investigated. Since the resulting fluorescence signal is proportional to the illumination intensity, the signal of each individual fluorophore is minimal (zero) at the central node. Moreover, as the signal of inelastic scatterers adds up (incoherently), scanning over two scatterers with $d < \lambda / 2$ also yields a joint signal $I(d)$ with a single minimum (Fig. 1d). In the absence of background this minimum is truly zero only for $d = 0$. Hence any deviation of the fluorescence minimum from zero is indicative of a finite $d$.

First consider a sinusoidal excitation (fringe) pattern that is scanned over two fluorophores at distance $d$ over a full period along the x-axis, see Fig. 1d, for simplicity. The resulting joint signal is given by $I(d, \phi) = a_0 + a_1(d) \cos(\phi - \phi_0)$, with $a_0$ denoting a constant offset and $a_1$ being an amplitude varying with $d$. The parameter $\phi_0$ gives the phase difference of the joint signal with respect to the phase $\phi = 4\pi x/\lambda$ of the sinusoidal illumination pattern. $a_0$ and $a_1$ depend on a number of parameters, including the brightness of the fluorophores, their separation, background, and the (usually finite) initial fringe contrast of the illumination. Furthermore, the modulation visibility is denoted with $v(d) = a_1(d)/a_0$.

A finite $d$ causes the sinusoidal fluorescence signals of the individual fluorophores to be spatially shifted with respect to each other, changing the visibility $v(d)$ of the joint modulation. Interestingly, contrary to the case of separation by maxima, reducing $d$ increases $v(d)$, implying that measuring $d$ with minima actually excels at small $d$. In the limiting case of $d = 0$ and zero background, the joint signal equals zero, meaning that even tiny $d$ can be measured due to the intrinsically low noise at the minimum. By contrast, for overlapping maxima at $d = \lambda/4$, $v(d)$ approaches zero and the separation is maximally challenged by noise. In any case, sampling $I(d, \phi)$ at three positions suffices to determine $a_0$, $a_1$ and $\phi_0$ and to resolve at $d$.

A lower bound on the precision with which the position of the two emitters can be estimated is provided by the Cramer-Rao Bound (CRB), see Ref. 10. The CRB is directly related to the Fisher Information (FI), which provides a measure on how much information can be inferred about the parameters of a model for $I(d, \phi)$, including the position of the fluorophores, given a statistical sample of their signal and a $I(d, \phi)$ model. The inelastically scattered signal may be regarded as an inhomogeneous Poisson process with an underlying mean specified by the convolution of the illumination pattern with the PSF of the imaging system.

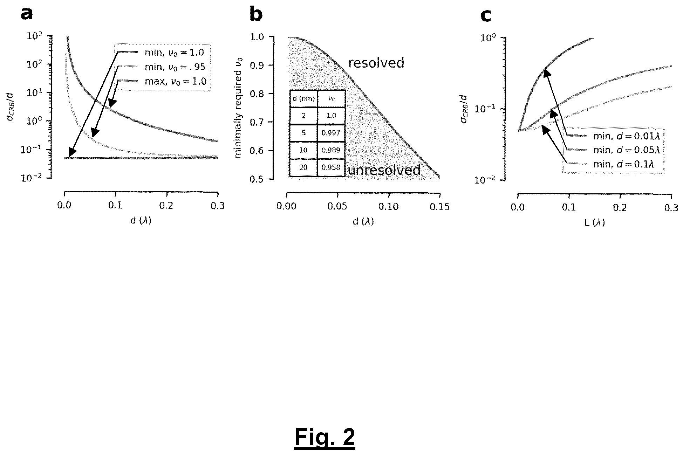

For a Poisson process, the FI is proportional to the ratio of the model gradient (squared) $\nabla I(d, \phi)$ and the absolute model value $I(d, \phi)$. This relationship maximizes the FI for scattered photons from the minimum and renders them more informative than those near the maximum. For two sources with separation d, the CRB as the precision $\sigma$ of the distance estimate scales approximately as $\sigma \propto \dfrac{d}{\sqrt{N}}$, and $\sigma \propto \dfrac{1}{d\sqrt{N}}$ for the minimum and the maximum, respectively. Consequently, a constant relative error of the estimate of $d$ for the minimum, but a diverging relative error for the maximum at small distances (Fig. 2a) are obtained. This holds true only in the limit of an infinitesimally small scanning interval $L \to 0$ and perfect contrast $v_0 = 1$ of the illumination pattern. A larger (finite) scanning range $L > 0$ and an imperfect initial

contrast $v_0 < 1$ degrade the quality of the estimate, see Figs. 2a to 2c. Yet, the estimate of $d$ provided by a minimum is at least two orders of magnitude more precise compared to that afforded by a maximum (Fig. 2a). It should be noted that this finding is irrespective of the shape of $I(d, \phi)$ since the decisive element is the minimum of the illumination beam, which, in first approximation, has a parabolic spatial intensity profile.

The CRB does not guarantee the existence of an estimator that attains this precision bound. However, among a range of options, it has been found that a polynomial maximum likelihood estimator of the parameters $a_0$, $a_1$ and $\phi_0$ is sufficient to retrieve a $d$ estimate from the photons near the minimum with a constant relative error. This advantage also remains amid non-negligible background and non-vanishing intensities at the illumination diffraction minima, see Fig. 2b.

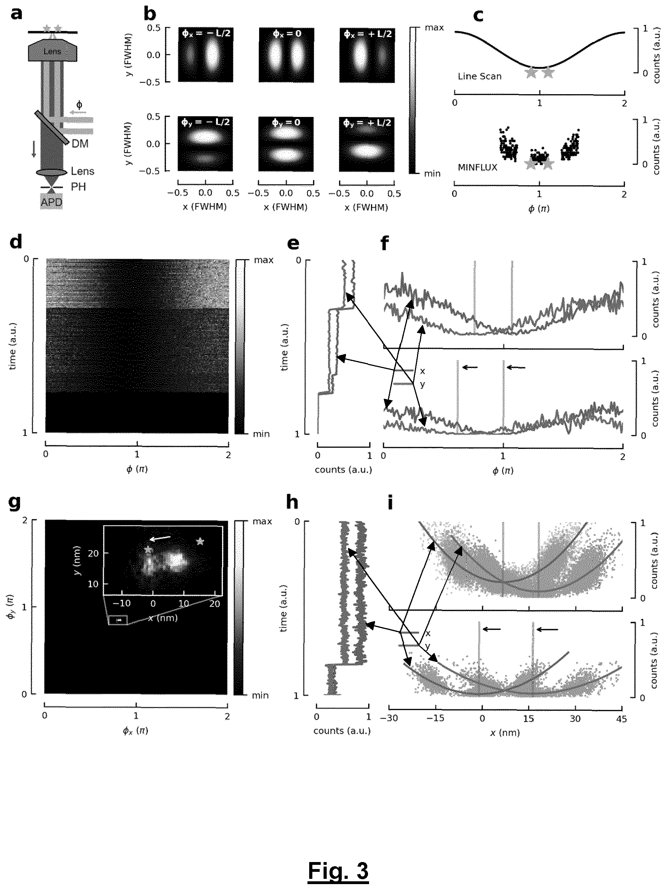

To experimentally find the minimal distance at which two inelastic scatterers can be distinguished, two fluorophores (Atto647N molecules) were placed at controlled distances 6 nm < $d$ < 90 nm, that is, at distances that are definitely considered not resolvable due to Rayleigh's limit. This spatial arrangement was realized by attaching the fluorophores to a DNA origami structure, a so-called nanoruler, see Ref. 11. The DNA structure served as a scaffold for attaching the fluorophores at a given $d$. Next, a line-shaped interference pattern in the focal plane of a scanning confocal microscope was obtained by illuminating opposing halves of the entrance pupil of its 1.4 numerical aperture oil immersion lens with two interfering excitation beams (Fig. 3a). Initially used for MINFLUX, see Ref. 12, this setup was detailed previously. In brief, the line-shaped focal interference pattern was oriented either in the x- or the y-direction and could be quickly interchanged by changing the x-and y-orientation of the two beams using an electro-optic device (Fig. 3b). Destructive interference at the focal point provided a central line-shaped diffraction minimum, whereas constructive interference a maximum. Changing the phase difference linearly between the beams allowed for scanning the pattern over the fluorophores (along the x- or the y-axis, Fig. 3c) so that the separation results provided by the minimum could be readily compared with that by the maximum.

These line-scans were consecutively repeated for both the x- and the y-axis until both molecules bleached; the stack of all x- or y- line-scans constituted an x- or y- trace, respectively (Fig. 3d). Thus, each trace allowed for considering all photons or just those originating near the diffraction minimum. For both cases a projection of the distance between the fluorophores to each axis was determined and $d$ was calculated. The sudden bleaching of individual fluorophores during the measurement has also been recorded (Fig. 3e). The ensuing sudden shift of the center of mass of the signal allowed for extracting $d$ as well (Figs. 3f to 3i). Pioneered in camera-based single molecule localization, see Ref. 13, this ON/OFF-based separation provided an independent control of the d measurement.

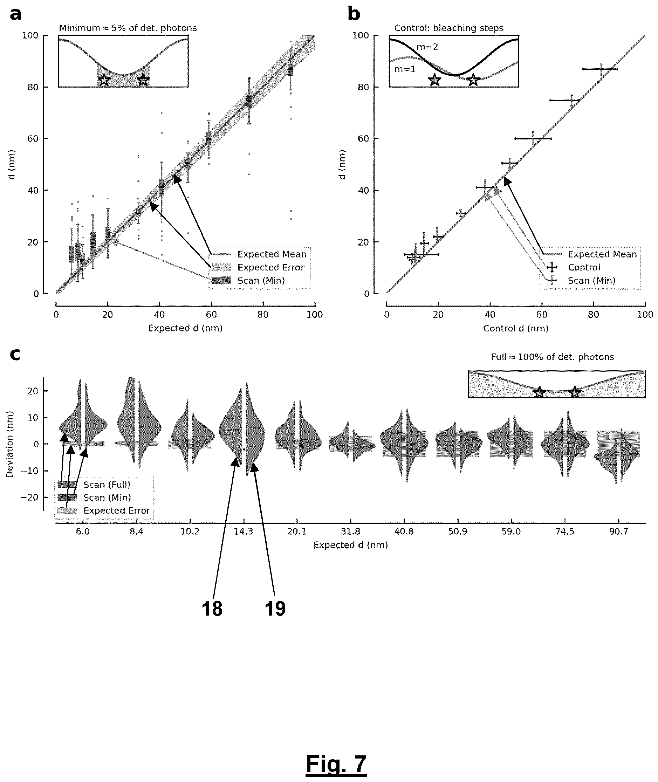

The experiments show that separating by scanning the entire interference pattern over the sample becomes inaccurate for $d < 30$ nm, whereas selecting photons from a region just near the minimum of a stacked line scan (trace) resolves the fluorophores down to $d$ of 10 nm. Moreover, the results nicely agree with those obtained by the bleaching control (Fig. 7). In accordance with theory, this finding demonstrates that the photons registered from the minimum excel at resolving fluorophores at small $d$. Perhaps more strikingly, using additional photons not only consumes time and the limited fluorescence budget, but also compromises resolution.

Consequently, the two fluorophores were next probed just with an excitation minimum. Like in previous MINFLUX recordings, three positions were sampled at

$$x_- = x_{COM} - \frac{L}{2}, x_0 = x_{COM}, x_+ = x_{COM} + \frac{L}{2} \text{ in}$$

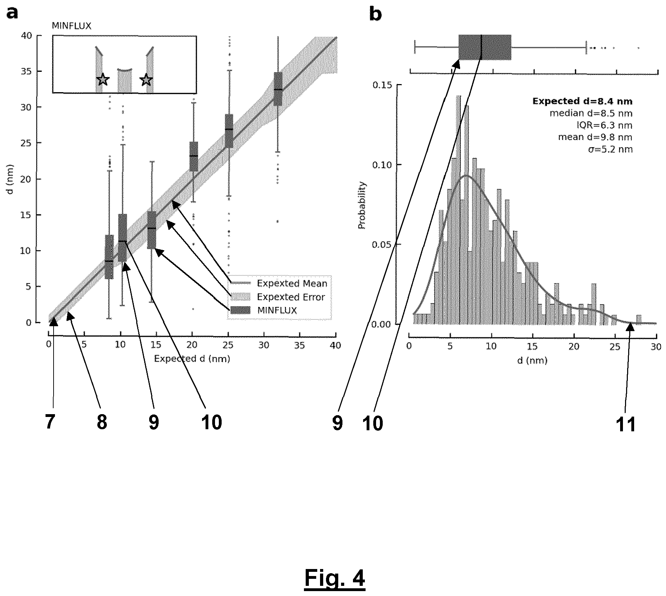

each axis whereby the size of $L$ was iteratively reduced. The center of mass ($x_{COM}$) of the two fluorophores was subsequently estimated using the fluorescence minimum. To estimate $d$, a number of such triples of positions and counts is combined into a bin of a certain number of photons. This procedure allows for reaching single-digit nanometer accuracy for the $d$ estimate with about 5000 photons (Fig. 4). Besides, it paves the way to resolving in dynamic settings, where distance and location of two fluorophores have to be determined continually, i.e., without ON/OFF interruption.

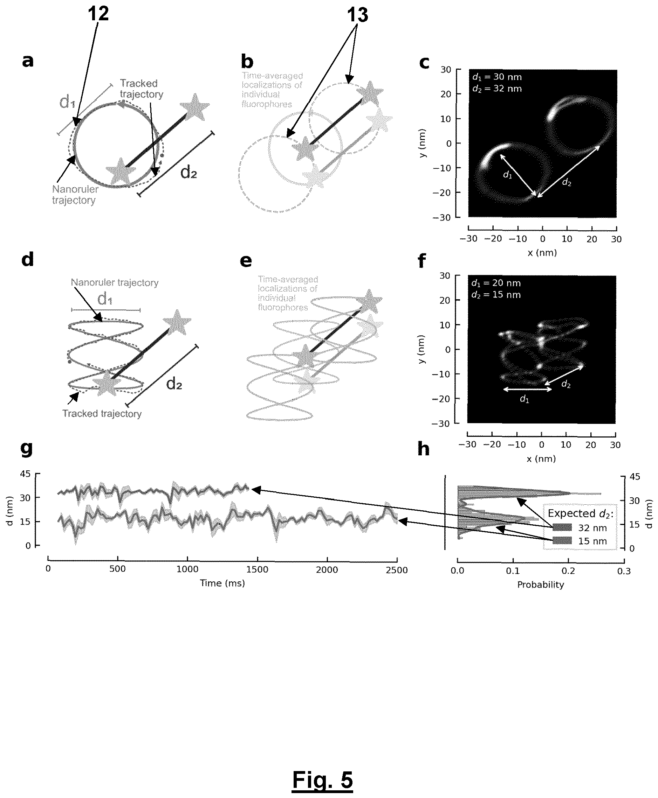

To demonstrate tracking of two moving emitting fluorophores, the sample stage was translated on a defined trajectory. As they were attached to a nanoruler, each of the fluorophores produced a slightly shifted copy of the trajectory of their counterpart. The time-resolved distance between the fluorophores can be extracted by tracking their center of mass and evaluating the signal for given points in time. Distance estimates for fluorophores at $d = 30$ nm (moving along a circle with 30 nm of diameter) and at $d = 15$ nm (moving on a higher-order Lissajous trajectory with 15 nm amplitude) are readily obtained (Fig. 5). These results, which are clearly not possible with popular camera-based tracking, demonstrate time-resolved distance measurement of spectrally identical and constantly emitting fluorophores far below the diffraction barrier. In other words, for establishing the nanometer scale distance as a function of time, ON/OFF switching or separation by excitation/emission wavelengths are not needed. This finding greatly relaxes the requirements on the fluorophores, since stable non-switching and non-blinking fluorophores can be used. Stable fluorophores generally bring about higher photon emission rates and much larger photon emission budgets. Moreover, individual fluorophores vary much less in emission which improves the precision of the distance estimates.

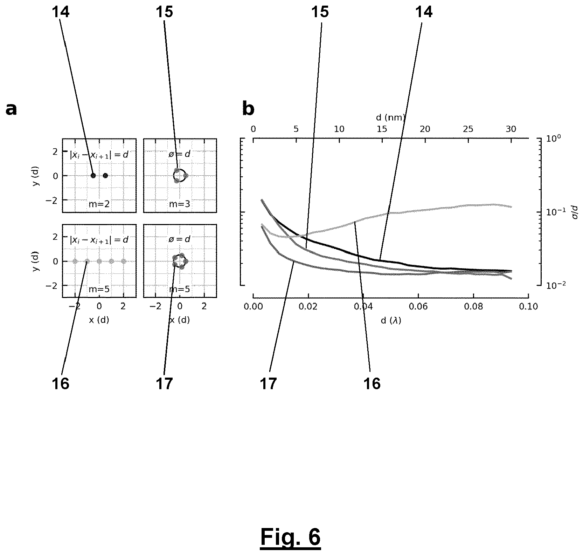

A remaining question is whether the potential of the diffraction minima can be extended to identifying the position of three or more identical scatterers located in a given geometric constellation and distance within regions $\ll \lambda/2$. To address this question, various constellations of equally bright fluorophores have been simulated (Fig. 6). The arrangements are parametrized by a single scaling parameter $d$. For a linear arrangement of scatterers, $d$ corresponds to a nearest-neighbor distance or it is the diameter of the circle circumscribing m scatterers forming a regular polygon. It was found that the advantageous scaling of the relative error $\sigma/d = RMSE(d)/d$ remains valid for more than two scatterers. Conceptually, a smaller distance parameter $d$ allows for discerning a larger number of scatterers. In practice, the attainable precision is lower-bounded by experimental imperfections such as finite background, variation of individual source brightness, and reduced initial contrast of the illumination pattern, i.e., finite 'depth' of the intensity minimum. Yet, the numerical data shows that for $d \ll \lambda/2$ and commonly encountered SNR, the position of individual inelastic scatterers can be identified for various geometrical arrangements. For scatterers arranged along a line at a given recurring distance $d$, the relative error increases with $d$ as the ensemble substantially extends into areas of larger intensity outside the probing minimum. Interestingly, not only linear but also polygonial or gridlike arrangements of a known number of identical scatterers allow for the identification of their mutual distance with a given number of detected photons.

In a nutshell, employing diffraction minima instead of maxima allows for, in principle, diffraction-unlimited separation of two spectrally identical incoherent point scatterers - even at finite photon numbers. This finding holds also for an arrangement of a known number of scatterers that are confined to sub- diffraction regions at distances $d \ll \lambda/2$, provided the geometrical form of the arrangement is by and large known. This finding has great potential for the optical investigation of dynamic (re) arrangements of proteins and other molecules with conventional optics at the nanoscale.

Moreover, the present disclosure highlights that, owing to the wide acceptance of the Rayleigh criterion, the ability of resolving individual scatterers with freely propagating light waves has been profoundly underestimated. This may partially be due to the fact that when employing diffraction maxima, resolution becomes increasingly harder with decreasing $d$, rendering the vision of extracting dimensions $d \ll \lambda/2$ with propagating (light) waves unrealistic. In stark contrast, the present disclosure shows that measuring with a diffraction minimum instantly opens up a measurement window in the $d \ll \lambda/2$ range resolving distances at 1/80 of the wavelength.

Besides the lower noise level at the minimum, a major component to the success of the method of the present disclosure is the robustness of the minimum with respect to aberrations. The spatial intensity profile of the minimum is approximately parabolic and is sampled only in the vicinity of the minimum, which makes it less prone to distortions. In comparison, popular deconvolution approaches employing diffraction maxima require detailed knowledge of the (aberrated) PSF of the system and need to identify these details amid the shot-noise at the maximum. Since there is no fundamental difference between fluorescence and other types of inelastic optical scattering, e.g. Raman scattering, given similar signal and background conditions, the present results should also be transferrable to these important fields of optics.

Last but not least, it the principle of separating with minima is also applicable to elastic scatterers at small distances, where distance-dependent phase differences between the light scattered by different sources will be negligible. Equally intriguing is the fact that by avoiding state transitions of the investigated material for separation, the approach of identifying the position of point scatterers with a diffraction minimum will be applicable to any type of point scatterers of any type of propagating wave, thus opening up superresolution to many other wave-based imaging modalities.

Now referring in greater detail to the drawings, **Fig. 1** illustrates utilizing a diffraction maximum vs. a minimum of light to resolve two inelastic point scatterers. **Fig. 1a:** When probed with a diffraction maximum of focused illumination light of certain Full-Width-Half-Maximum (FWHM), two closely spaced scatterers (illustrated as stars) cannot be resolved for separations below the diffraction limit of $d \approx 1$ FWHM $\approx 280$ nm. For separations below this limit, changing the positions of the scatterers only marginally alters the combined emission (note the similarity of the difference images for two separation values $d_1 = 0.03$ FWHM and $d_2 = 0.3$ FWHM shown in the panel row below). For each image, $N = 10^6$ detected photons are considered in the calculation. **Fig. 1b:** When probed with a minimum, the same disparity in $d$ notably alters the joint signal; note the signal increase 6 in the pertinent difference images. **Fig. 1c:** 1D Intensity profile of scattered light when illuminating the scatterers with a diffraction maximum. Changing $d$ yields an intensity modulation of the joint signal that remains within the (Poisson) noise band of the mean signal for both $d$, i.e., the two sources cannot be resolved amid noise. **Fig. 1d:** When illuminating the same scatterers with a diffraction minimum, the modulation at the minimum of the resulting signal is outside the noise bands, allowing separation. Decreasing $d$ results in a deeper minimum of the joint signal. The insets in panels c and d show the profile of the individual average intensity profiles scattered by each point scatterer as well as their joint signal.

**Fig. 1** illustrates a theoretical localization precision of two point scatterers probed with a diffraction maximum (max) or a diffraction minimum (min) for N=100 detected photons. **Fig. 2a:** Cramér Rao-bound (CRB) divided by separation $d$, i.e., relative CRB ($\sigma_{CRB}/d$), for different initial visibilities $v_0$. When probing with a minimum the relative CRB for the resolution remains constant, while it diverges for the maximum. Imperfect contrast of the minimum of the illumination light ($v_0=0.95$) deteriorates the precision, yet the relative CRB is improved by roughly two orders of magnitude over its counterpart employing a maximum. **Fig. 2b:** Impact of the visibility $v_0$ on the resolvable distance d. Measuring small distances requires a high contrast of the illumination pattern, i.e. a minimum with sufficient 'depth'. Here, a successful distance measurement ('resolved') is required to exhibit a relative CRB < 0.5. The inset table provides exemplary values of required minimum visibility to measure $d$ ($\lambda$ = 640 nm). **Fig. 2c:** Relative CRB with respect to scanning range $L$ near the minimum of the combined signal, exemplified for various $d$. The precision improves with decreasing $L$, which implies that probing as close to the minimum of the joint signal improves the distance estimate.

**Fig. 2** illustrates a measurement of distances between two simultaneously emitting fluorescence molecules by (x,y-) scanning with an illumination intensity minimum. **Fig. 3a:** Scanning fluorescence microscope with photon-counting detection (APD) of fluorescence passing the dichroic mirror (DM) and a confocal pinhole (PH). The interference of two beams with adjustable phase difference $\phi$ entering the pupil of the objective lens creates an illumination intensity pattern in the focal plane featuring x- or y-oriented line-shaped diffraction minima and maxima (MINFLUX setup). Two fluorophores sketched as stars **Fig. 3b:** Changing $\phi$ scans the line-shaped minima in the y-and x-direction. **c:** Top: Line-scan principle: linear ramp of $\phi$ over $2\pi$ shifts the minimum across the scatterers, producing a sinusoidal line profile of fluorescence (or scattered signal). Bottom: The continuous line-scan is adequately replaced by probing three points near the scatterers with the minimum (MINFLUX recording). **Fig. 3d:** Normalized counts measured during repeated line-scans. The absolute number of counts decreases over time in a stepwise manner as individual fluorophores bleach. Repeated ramping of $\phi$ over $2\pi$ in x- and y direction across the scatterers yields a line-scan stack. **Fig. 3e:** Averaged counts per line, normalized over the whole stack. Two bleaching steps are clearly visible, marking transitions from two molecules, to one, to zero (background). **Fig. 3f:** Exemplary lines from two and a single molecule show the sinusoidal profile of the fluorescence counts and the spatial center of mass shift after the first bleaching step. Each line allows for extracting information based on the photons just near the minimum, the maximum, or from the entire line. **Fig. 3g:** Heat map of localizations of the fluorescence center of mass for two fluorophores at 20 nm distance. Inset: Two clusters of localizations are visible showing the center of mass shift after one fluorophore bleached. **Fig. 3h:** Averaged counts per 3-points MINFLUX measurement for x and y axis normalized over the whole measurement. The bleaching steps and fluctuations in fluorophore brightness are clearly visible. **Fig. 3i:** Normalized counts for each segment. A second order polynomial fit shows a change of the shape of the parabola after the bleaching step as well as a shift of the position of the minimum. Measurement of $d$ relies only on photons from the first (two molecule) segment; the bleaching steps are considered just for an independent control.

**Fig. 4** illustrates resolving two constantly emitting fluorophores at distances down to 8 nm. **Fig. 4a:** Boxplot of the measured distances $d$ over the expected distance 7 as specified by the manufacturer of the DNA nanoruler scaffold. Recording the photons originating near the illumination minimum (see inset) suffice to separate simultaneously emitting fluorophores down to d = 8.4 nm within the uncertainty 8 specified by the manufacturer. The box 9 extends from the lower to upper quartile values of the data. Error bars mark the interval from the median 10 within box to the last point within a 1.5 interquartile range (IQR). Outliers are shown as dots. Independent measurements per box: 8.4 nm: 307; 10.2 nm: 322; 14.3 nm: 218; 20.1 nm: 272; 25 nm: 231; 31.8 nm: 283. **Fig. 4b:** Histogram of the distances obtained for the 8.4 nm fluorophore separation overlaid with the scaled probability density function 11. The corresponding box plot from a is shown above.

**Fig. 5** illustrates an uninterrupted resolution and localization of two moving fluorophores. **Fig. 5a:** Schematic of the measurement: A nanoruler with two fluorophores is moved on a pre-defined trajectory (circle) using the microscope stage. The center of mass of the two fluorophores is tracked with an illumination intensity minimum 12. Distances $d_2$ are estimated in a bootstrapping approach along the obtained traces. **Fig. 5b:** The subsequent positions of the fluorophores are calculated relative to the current center of mass coordinate. This results in the trajectories of the individual fluorophores 13. **Fig. 5c:** Exemplary trace of a $d_2$ = 32 nm nanoruler moving along a circle with $d_1$ = 30 nm diameter. Time-averaged image of the two fluorophores results in two displaced circles. **Fig. 5d:** Nanoruler with $d_2$ = 15 nm moving along a Lissajous-figure with amplitudes 15 nm and 20 nm in x and y direction, respectively. **Fig. 5e:** The trajectories of the individual fluorophores result in shifted copies of the center of mass movement. **Fig. 5f:** Exemplary trace of a $d_2$ = 15 nm nanoruler moving along the Lissajous figure. Time-averaged image of the two fluorophores results in two displaced copies of the Lissajous figure. **Fig. 5g:** Time series of measured distances (thick line) for 50 ms time-bins. Error bands correspond to a moving standard deviation (200 ms window). For each bin, the respective tuples according to their time-stamp are selected and the distance and orientation of the fluorophores are estimated. **Fig. 5h:** Histogram of measured distances (no averaging) yields clearly distinguishable populations for nanorulers of $d$ = 32 nm (red) and $d$ = 15 nm (blue). The histograms are overlaid with the scaled probability density function.

**Fig. 6** illustrates a numerical simulation of a sub-diffraction localization of multiple simultaneously scattering point sources. **Fig. 6a:** Spatial arrangement of up to m=5 point scatterers (fluorophores): lines and regular polygon. The scaling parameter d denotes the nearest-neighbor distance between point sources on a line or, in case of the polygon, the diameter of the circle circumscribing all sources. **Fig. 6b:** Numerical simulation of the relative distance error $\sigma/d = RMSEC(\langle d \rangle)/d$ for the arrangements shown in a same grey shade coding 14 to 17. Note that at fixed distances $d < 0.018\lambda$, five scatters in a line can be resolved more precisely than two, indicating that the resolution favourably depends on the number of scatterers as long as the ensemble does not significantly extend beyond the minimum ($d > 0.02\ \lambda$) of the probing intensity beam (compare line 14 and line16). In case of the regular polygon, adding a scatterer increases the emitter density i.e., does not change the spatial extent of the ensemble, and hence improves the accuracy of the $d$ estimate at small $d$ (line 15 with line 17). Again, this implies that over small distances $d,$ for example $d < 20$ nm, localization and measurement of distance between a larger number of scatterers is advantageous over a smaller number. The numerical distance values are obtained for $N = 500$ detected photons, a realistic probing range of $L = 30$ nm, an average background emission equivalent to $\beta = 0.1$ emitting molecules in the background and $\lambda = 640$ nm.

**Fig. 7** illustrates a distance measurement via line-scans and control measurement via bleaching steps. **Fig. 7a:** Boxplot of the distance estimates obtained from line-scan experiments with respect to expected distances up to 90 nm. Here, the distance of two fluorophores is determined by selecting photons near the minimum of a line-scan (Min, see inset). The box extends from the lower to upper quartile values of the data. Error bars mark the interval from the median (black line within box) to the last point within a 1.5 interquartile range. Outliers are shown as dots. The experiment agrees with the expected d down to 10 nm. For $d < 10$ nm, the estimation saturates and fails to distinguish between shorter and longer nanorulers; this can be attributed to experimental imperfections, such as a non-zero minimum intensity of the probing pattern. **Fig. 7b:** Correlation between obtained distance estimates and the control by center of mass shift due to bleaching of one molecule. While the methods agree well on the separation estimation, the method of the present disclosure relying on the minimum is more precise than the control and uses only a fraction of the available photons (5 %) of a full line-scan. The inset depicts how the center of mass shift allows for determining $d$ via a bleaching step. **Fig. 7c:** Half-violin plot of the deviation of obtained distance estimates from the expected distance. Distance estimates obtained by utilizing all photons available from a full line-scan 18 are compared with estimation utilizing only photons near the emission minimum 19. Considering more photons does not improve the co-localization accuracy or precision, since photons from the maxima do not add information. On the contrary, longer measurement sequences and exposure to higher illumination intensities increase blinking of the molecules and deteriorate the measurement, for example by saturation of the emission.

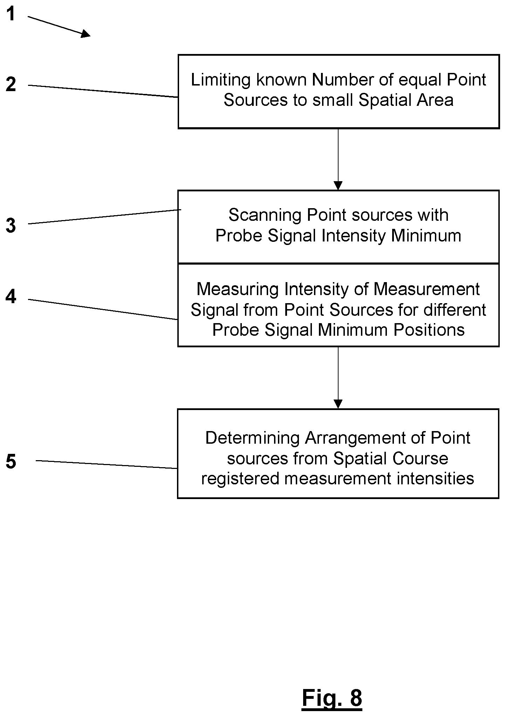

In the method 1 of determining an arrangement of equal point sources in a sample according to the present disclosure, which is illustrated in **Fig. 8** as a flow chart, the point sources are limited 2 both to a known point source number of at least two and of not more than 32, i. e. of not more than $2^5$, and to a small spatial area of the sample. Then, the point sources are scanned 3 with a probe signal comprising a probe signal intensity. A spatial intensity distribution of the probe signal intensity has a local probe signal intensity minimum that is, in at least one spatial direction, delimited on both sides by probe signal intensity maxima. The local probe signal intensity minimum is positioned at different probe signal minimum positions at distances in the at least one spatial direction. A measurement intensity of a measurement signal coming from the point sources is registered 4 for each of the different probe signal minimum positions. The measurement intensity depends on the probe signal intensity at point source positions of the point sources. The arrangement of the point sources is determined 5 from a spatial course of the registered measurement intensities over the different probe signal minimum positions. In the step of limiting 2 the point sources has been limited to such a small spatial area of the sample that the spatial course of the registered measurement intensities over the different probe signal minimum positions only has one local measurement signal minimum.

## References

1. Rayleigh, Lord. On the Theory of Optical Images, with special reference to the Microscope. Journal of the Royal Microscopical Society 23, 474-482 (1903).
2. Abbe, E. Beiträge zur Theorie des Mikroskops und der mikroskopischen Wahrnehmung. Archiv f. mikrosk. Anatomie 9, 413-468 (1873).
3. Wilson, T. & Sheppard, C. Theory and practice of scanning optical microscopy. London: Academic Press (1984).
4. Hell, S. W. Far-Field Optical Nanoscopy. Science 316, 1153-1158 (2007).
5. Hell, S. W. Nobel Lecture: Nanoscopy with freely propagating light. Rev. Mod. Phys. 87, 1169-1181 (2015).
6. Balzarotti, F. et al. Nanometer resolution imaging and tracking of fluorescent molecules with minimal photon fluxes. Science (2017).
7. Jungmann, R. et al. Single-Molecule Kinetics and Super-Resolution Microscopy by Fluorescence Imaging of Transient Binding on DNA Origami. Nano Lett. 10, 4756-4761 (2010).
8. Carrington, W. A. et al. Superresolution Three-Dimensional Images of Fluorescence in Cells with Minimal Light Exposure. Science 268, 1483-1487 (1995).
9. Pawley, J. Handbook of Biological Confocal Microscopy. (Springer Science & Business Media, 2013).
10. Ram, S., Ward, E. S. & Ober, R. J. Beyond Rayleigh's criterion: A resolution measure with application to single-molecule microscopy. Proceedings of the National Academy of Sciences 103, 4457-4462 (2006).

11. Raab, M. et al. Using DNA origami nanorulers as traceable distance measurement standards and nanoscopic benchmark structures. Sci Rep 8, 1780 (2018).

12. Wolff, J. O. et al. MINFLUX dissects the unimpeded walking of kinesin-1. Science 379, 1004-1010 (2023).

13. Gordon, M. P., Ha, T. & Selvin, P. R. Single-molecule high-resolution imaging with photobleaching. Proceedings of the National Academy of Sciences 101, 6462-6465 (2004).

## Claims

1. A method of determining an arrangement of point sources in a sample, comprising

   - scanning (3) the point sources with a probe signal comprising a probe signal intensity,

     - a spatial intensity distribution of the probe signal intensity having a local probe signal intensity minimum that is, in at least one spatial direction, delimited on both sides by probe signal intensity maxima, and
     - the local probe signal intensity minimum being positioned at different probe signal minimum positions at distances in the at least one spatial direction,

   - registering (4) a measurement intensity of a measurement signal coming from the point sources for each of the different probe signal minimum positions,

     - the measurement intensity depending on the probe signal intensity at point source positions of the point sources,

   - determining (5) the arrangement of the point sources from a spatial course of the registered measurement intensities over the different probe signal minimum positions,
   **characterized by**
   - limiting (2) the point sources whose arrangement is determined from the spatial course of the registered measurement intensities over the different probe signal minimum positions

     - to a known point source number of at least 2, and
     - to such a small spatial area of the sample that the spatial course of the registered measurement intensities over the different probe signal minimum positions has one local measurement signal minimum, and

   - utilizing previous knowledge of the arrangement of the point sources in determining the arrangement of the point sources from the spatial course of the registered measurement intensities over the different probe signal minimum positions, the previous knowledge including the known point source number and, at least with a point source number above 4, a basic geometry of the arrangement of the point sources.

2. The method of claim 1, **wherein** the arrangement of the point sources is determined from a shape of the one local measurement signal minimum.

3. The method of claim 1 or 2, **wherein** the arrangement of the point sources is determined from a depth and/or a width of the one local measurement signal minimum.

4. The method of claim 2 or 3, **wherein** the one local measurement signal minimum is compared with

   - a comparative local measurement signal minimum that corresponds to a comparative arrangement of the point sources in which the point source positions of the point sources are identical in the at least one spatial direction and/or
   - the local probe signal intensity minimum.

5. The method of any of the preceding claims, **wherein** the step of determining the arrangement of the point sources comprises fitting a curve to the registered measurement intensities.

6. The method of claim 5, **wherein** at least one fit variable that is tuned in fitting the curve to the registered measurement intensities is a parameter, optionally a distance, that describes the arrangement of the point sources.

7. The method of any of the preceding claims, **wherein**

   - the point source number is not more than 32 or not more than 16 or not more than 8 or not more than 4, and/or
   - the previous knowledge of the arrangement of the point sources includes relative scattering cross sections of the individual point sources, wherein, optionally, the relative scattering cross sections of the individual point sources are equal.

8. The method of any of the preceding claims, **wherein** the arrangement of the point sources is determined with regard to their point source distances in the at least one spatial direction, and, optionally, with regard to their center of mass in the at least one spatial direction.

9. The method of any of the preceding claims, **wherein** the point sources are neither switchable nor blinking with regard to the dependence of the measurement intensity on the probe signal intensity at the point source positions.

10. The method of any of the preceding claims, **wherein** the probe signal has a wavelength, and wherein

   - the local probe signal intensity minimum is formed using destructive interference of the probe signal, and/or
   - the spatial area of the sample to which the point sources are limited is not larger than 1/50 of the wavelength and optionally not larger than 1/75 of the wavelength in the at least one spatial direction.

11. The method of any of the preceding claims, **wherein** the local probe signal intensity minimum comprises a zero of the probe signal intensity.

12. The method of any of the preceding claims, **wherein** the spatial area of the sample to which the point sources are limited is not larger than 1/10 and optionally not larger than 1/20 of a FWHM of the local probe signal intensity minimum.

13. The method of any of the preceding claims, **wherein** the probe signal is an electromagnetic signal or a sound signal.

14. The method of any of the preceding claims, **wherein** the measurement signal is

   - fluorescence light, the point sources being fluorophores, or
   - inelastically scattered light, optionally Raman-scattered light, or
   - elastically scattered light, or
   - scattered sound, optionally scattered ultrasound.

15. The method of any of the preceding claims, **wherein** the steps of

   - scanning the point sources with the probe signal,
   - registering the measurement intensity of the measurement signal coming from the point sources, and

   - determining the arrangement of the point sources from a spatial course of the registered measurement intensities over the different probe signal minimum positions,

are repeated in order to track variations of the arrangement of the point sources, optionally with regard to external influences on the sample and/or movements of an entity, to which the point sources are attached, within in the sample.

**Fig. 1**

**Fig. 2**

**Fig. 3**

**Fig. 4**

Fig. 5

**Fig. 6**

**Fig. 7**

**1**

**2** — Limiting known Number of equal Point Sources to small Spatial Area

**3** — Scanning Point sources with Probe Signal Intensity Minimum

**4** — Measuring Intensity of Measurement Signal from Point Sources for different Probe Signal Minimum Positions

**5** — Determining Arrangement of Point sources from Spatial Course registered measurement intensities

**Fig. 8**

Europäisches
Patentamt

European
Patent Office

Office européen
des brevets

# EUROPEAN SEARCH REPORT

**Application Number**

EP 24 15 3504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANCISCO BALZAROTTI ET AL: "Nanometer resolution imaging and tracking of fluorescent molecules with minimal photon fluxes", SCIENCE, vol. 355, no. 6325, 10 February 2017 (2017-02-10), pages 606-612, XP055426923, US ISSN: 0036-8075, DOI: 10.1126/science.aak9913 * the whole document * | 1-15 | INV. G02B21/00 G01N21/64 |
| A | GWOSCH KLAUS C ET AL: "MINFLUX nanoscopy delivers 3D multicolor nanometer resolution in cells", NATURE METHODS, NATURE PUBLISHING GROUP US, NEW YORK, vol. 17, no. 2, 13 January 2020 (2020-01-13), pages 217-224, XP037006746, ISSN: 1548-7091, DOI: 10.1038/S41592-019-0688-0 [retrieved on 2020-01-13] * the whole document * | 1-15 | |
| A | US 9 739 993 B2 (BIOAXIAL SAS [FR]) 22 August 2017 (2017-08-22) * the whole document * | 1-15 | TECHNICAL FIELDS SEARCHED (IPC) G02B G01N |

The present search report has been drawn up for all claims

| Place of search | Date of completion of the search | Examiner |
|---|---|---|
| Munich | 26 June 2024 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 592 728 A1**

## ANNEX TO THE EUROPEAN SEARCH REPORT
## ON EUROPEAN PATENT APPLICATION NO.

EP 24 15 3504

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| US 9739993 | B2 | 22-08-2017 | FR | 2989472 A1 | 18-10-2013 |
| | | | US | 2015212308 A1 | 30-07-2015 |

EPO FORM P0459

For more details about this annex : see Official Journal of the European Patent Office, No. 12/82

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9719928 B2
- US 10962479 B2

- WO 2016156541 A1

**Non-patent literature cited in the description**

- **RAYLEIGH, LORD**. On the Theory of Optical Images, with special reference to the Microscope. *Journal of the Royal Microscopical Society*, 1903, vol. 23, 474-482
- **ABBE, E.** Beiträge zur Theorie des Mikroskops und der mikroskopischen Wahrnehmung. *Archiv f. mikrosk. Anatomie*, vol. 9, 413-468
- **WILSON, T.** ; **SHEPPARD, C**. Theory and practice of scanning optical microscopy. Academic Press, 1984
- **HELL, S. W**. Far-Field Optical Nanoscopy. *Science*, 2007, vol. 316, 1153-1158
- **HELL, S. W**. Nobel Lecture: Nanoscopy with freely propagating light.. *Rev. Mod. Phys.*, 2015, vol. 87, 1169-1181
- **BALZAROTTI, F. et al.** Nanometer resolution imaging and tracking of fluorescent molecules with minimal photon fluxes. *Science*, 2017
- **JUNGMANN, R. et al.** Single-Molecule Kinetics and Super-Resolution Microscopy by Fluorescence Imaging of Transient Binding on DNA Origami. *Nano Lett.*, 2010, vol. 10, 4756-4761

- **CARRINGTON, W. A et al.** Superresolution Three-Dimensional Images of Fluorescence in Cells with Minimal Light Exposure. *Science*, 1995, vol. 268, 1483-1487
- **PAWLEY, J.** Handbook of Biological Confocal Microscopy.. Springer Science & Business Media, 2013
- **RAM, S** ; **WARD, E. S.** ; **OBER, R. J**. Beyond Rayleigh's criterion: A resolution measure with application to single-molecule microscopy. *Proceedings of the National Academy of Sciences*, 2006, vol. 103, 4457-4462
- **RAAB, M et al.** Using DNA origami nanorulers as traceable distance measurement standards and nanoscopic benchmark structures. *Sci Rep*, 2018, vol. 8, 1780
- **WOLFF, J. O. et al.** MINFLUX dissects the unimpeded walking of kinesin-1.. *Science*, 2023, vol. 379, 1004-1010
- **GORDON, M. P** ; **HA, T** ; **SELVIN, P. R.** Single-molecule high-resolution imaging with photobleaching. *Proceedings of the National Academy of Sciences*, 2004, vol. 101, 6462-6465